(19) Europäisches Patentamt
European Patent Office
Office européen des brevets

(11) Veröffentlichungsnummer: **0 197 490**
**B1**

(12) # EUROPÄISCHE PATENTSCHRIFT

(45) Veröffentlichungstag der Patentschrift: **24.05.89**

(51) Int. Cl.⁴: **C 08 F 214/26**, C 08 F 210/02 // (C08F214/26, 210:02), (C08F210/02, 214:26)

(21) Anmeldenummer: **86104442.8**

(22) Anmeldetag: **01.04.86**

(54) **Stabile, wässrige, kolloidale Dispersionen von Copolymerisaten des Typs Tetrafluorethylen-Ethylen und Verfahren zu deren Herstellung.**

(30) Priorität: **06.04.85 DE 3512633**

(43) Veröffentlichungstag der Anmeldung: **15.10.86 Patentblatt 86/42**

(45) Bekanntmachung des Hinweises auf die Patenterteilung: **24.05.89 Patentblatt 89/21**

(84) Benannte Vertragsstaaten: **BE DE FR GB IT NL**

(56) Entgegenhaltungen: **EP-A- 0 043 499**

(73) Patentinhaber: **HOECHST AKTIENGESELLSCHAFT, Postfach 80 03 20, D-6230 Frankfurt am Main 80 (DE)**

(72) Erfinder: **Sulzbach, Reinhard Albert, Dr., Kammererstrasse 10, D-8263 Burghausen (DE)**
Erfinder: **von Werner, Konrad, Dr., Buch 1 1/2, D-8261 Halsbach (DE)**

**EP 0 197 490 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft stabile, wäßrige, kolloidale Dispersionen von Copolymerisaten des Typs Tetrafluorethylen-Ethylen, bestehend aus höchstens 60 Mol-% an copolymerisierten Einheiten des Tetrafluorethylens, 60 bis 40 Mol-% an copolymerisierten Einheiten des Ethylens und 0 bis 15 Mol-% an copolymerisierten Einheiten mindestens eines weiteren α-olefinischen Monomeren sowie ein Verfahren zur Herstellung von solchen Dispersionen durch Copolymerisation dieser Comonomeren in wäßriger Phase in Gegenwart von üblichen radikalbildenden Initiatoren, von fluorierten Carbonsäuren oder deren Salzen sowie gegebenenfalls von Kettenübertragungsmitteln.

Copolymerisate aus Tetrafluorethylen- und Ethylen-Einheiten sind bekannt. Sie zeigen eine ausgezeichnete Temperatur- und Chemikalienbeständigkeit und können aus der Schmelze nach thermoplastischen Formgebungsverfahren verarbeitet werden. Die ausschließlich aus Tetrafluorethylen- und Ethylen-Einheiten bestehenden Copolymerisate sind allerdings im Temperaturbereich zwischen 150°C und 200°C spröde. Eine Verbesserung wird dadurch erreicht, daß man Einheiten von anderen Vinylmonomeren in einem Anteil von bis zu 15 Mol-% in die Ketten dieser Copolymeren einbaut. Solche Copolymerisate, bestehend aus Tetrafluorethylen, Ethylen und gegebenenfalls weiteren Monomeren werden üblicherweise durch Polymerisation in organischen Lösungsmitteln hergestellt, beispielsweise in Fluoralkanen oder Fluorchloralkanen. Bei dieser Art der Copolymerisation erhält man eine Aufschlämmung der Copolymerisat-Teilchen mit einem mittleren Teilchendurchmesser von >10 µm im Lösungsmittel. Die hierfür eingesetzten Fluoralkane oder Fluorchloralkane sind kostspielige Substanzen, die möglichst weitgehend zurückgewonnen werden müssen. Es ist daher auch schon versucht worden, die Copolymerisation von Tetrafluorethylen und Ethylen in Gemischen aus Wasser und einem organischen Lösungsmittel oder in rein wäßrigem Reaktionsmedium durchzuführen. Der Einsatz von Fluorchloralkanen im Gemisch mit Wasser wird beschrieben in der japanischen Patentbekanntmachung 49-011 746 und der offengelegten japanischen Patentanmeldung 49-024 295.

Aus der US-PS 3 960 825 ist ein Verfahren bekannt, bei dem zum wäßrigen Reaktionsmedium 10 bis 150 Gew.-% eines Fluorchloralkans als Reaktionsbeschleuniger zugesetzt werden. In der US-PS 2 468 664 und der US-PS 3 401 155 werden Gemische aus tert.-Butylalkohol und Wasser als Reaktionsmedium empfohlen. Nach den genannten Verfahren sind jedoch stabile, ausschließlich wäßrige Dispersionen, bestehend aus kolloidalen Teilchen von Copolymerisaten des Typs Tetrafluorethylen-Ethylen, nicht herstellbar. Die Herstellung solcher Dispersionen gelingt auch dann nur unbefriedigend, wenn man unter Bedingungen arbeitet, wie sie für die Herstellung wäßriger kolloidaler Dispersionen von Polytetrafluorethylen üblich sind, das heißt, in Gegenwart von handelsüblichen perfluorierten Emulgatoren und wasserlöslichen peroxidischen Verbindungen oder Redox-Systemen als Initiatoren. Unter diesen Bedingungen findet entweder keine Umsetzung statt oder die Dispersionen koagulieren bereits bei sehr geringem Feststoffgehalt, falls man nicht zusätzlich organische Lösungsmittel, wie beispielsweise Trifluortrichlorethan, als stabilisierende Zusätze verwendet, wie dies in der IT-PS 874 129 beschrieben ist. In der US-PS 2 559 752, Beispiel V, wird gemäß dieser Arbeitsweise ohne Lösungsmittel eine kolloidale Dispersion mit lediglich 12,4 Gew.-% Feststoff erhalten.

Die Herstellung kolloidaler Dispersionen in rein wäßriger Phase ist bekanntgeworden im Zusammenhang mit dem Einsatz von Mangansäuren oder deren Salzen als Initiatoren, in Gegenwart von üblichen Emulgatoren, wobei wäßrige Dispersionen von Tetrafluorethylen-Ethylen-Copolymerisaten mit einem Feststoffgehalt bis zu etwa 15 Gew.-% erhalten werden können. Dies ist beschrieben in der US-PS 3 859 262.

Nach dieser bekannten Arbeitsweise erhält man jedoch wäßrige, kolloidale Dispersionen von Copolymerisaten des Tetrafluorethylens mit Ethylen (und gegebenenfalls mit weiteren Monomeren), die ein für die Verarbeitung des Copolymerisats nach thermoplastischen Formgebungsverfahren zu hohes Molekulargewicht und daraus resultierend eine zu hohe Schmelzviskosität (beziehungsweise einen zu niedrigen Schmelzindex) aufweisen. Als weiteren Nachteil besitzen die nach diesem bekannten Verfahren hergestellten wäßrigen, kolloidalen Dispersionen eine unbefriedigende Dispersionsstabilität, das heißt, sie neigen zur Koagulation und koagulieren gänzlich, wenn man bei der Copolymerisation einen Feststoffgehalt von 15 Gew.-% überschreitet.

Schließlich ist aus der US-PS 4 338 237 ein Verfahren zur Herstellung wäßriger, kolloidaler Dispersionen von Copolymerisaten des Typs Tetrafluorethylen-Ethylen bekannt, in dem stabilere wäßrige, kolloidale Dispersionen dadurch erhalten werden, daß man die Copolymerisation in Gegenwart von Mangansäuren oder deren Salzen und fluorierten Emulgatoren unter Zusatz eines Kettenübertragungsmittels – wofür vorzugsweise Malonsäurederivate Verwendung finden – und einer die Dispersion stabilisierenden Verbindung, die keinen oberflächenaktiven Charakter besitzt – dafür insbesondere Ammoniumoxalate in Betracht kommen, gegebenenfalls unter Zusatz von anderen Ammoniumsalzen – durchführt. Bei der Herstellung von wäßrigen, kolloidalen Dispersionen von Copolymerisaten des Typs Tetrafluorethylen-Ethylen nach diesem Verfahren tritt zwar während der Polymerisation eine stark verringerte Koagulatbildung ein, verglichen mit den seinerzeit bekannten anderen Verfahren, jedoch entsprechen die so erhaltenen Dispersionen noch nicht den hohen Anforderungen, wie sie insbesondere im Hinblick auf die Scherstabilität gestellt werden, welche für die Handhabung solcher Dispersionen von entscheidender Bedeutung ist. Ist die Scherstabilität zu gering, so tritt unerwünschte Koagulation unter Scherbeanspruchung, beispielsweise beim Fördern oder Pumpen oder beim Schütteln auf dem Transport, ein. Eine Verbesserung der Scherstabilität kann zwar durch die nachträgliche Zugabe von nichtfluorierten Dispersionsstabilisatoren, wie beispielsweise von oxalkylierten Alkylphenolen, erreicht werden. Solche Zusätze können jedoch bei vielen Anwendungen nicht eingesetzt werden, da sie im Polymerisat verbleiben und sich bei thermischer Belastung unter starker Verfärbung zersetzen. Man ist daher bestrebt, Dispersionen mit guter Scherstabilität zu erhalten und den Einsatz zusätzlicher nichtfluorierter Emulgatoren zu vermeiden.

Zur Erreichung dieses Ziels stellt die vorliegende Erfindung stabile, wäßrige, kolloidale Dispersionen von Copolymerisaten des Typs Tetrafluorethylen-Ethylen, bestehend aus höchstens 60 Mol-% und mindestens 30 Mol-% an copolymerisierten Einheiten des Tetrafluorethylens, 60 bis 40 Mol-% an copolymerisierten Einheiten des Ethylens und 0 bis 15 Mol-% an copolymerisierten Einheiten mindestens eines weiteren α-olefinischen Comonomeren und enthaltend eine die Dispersion stabilisierende Verbindung der Formel

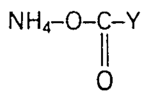

worin Y = $COONH_4$, COOH, $CH_3$, $CH_2OH$, $CH_2COOH$ oder $CH_2COONH_4$ ist, oder ein Gemisch dieser Verbindungen, die dadurch gekennzeichnet sind, daß diese Dispersionen

– 0,1 bis 1 Gew.-%, bezogen auf die Dispersion, eines Gemisches aus 98 bis 80 Gew.-% Perfluoroctansäure oder deren Alkali- oder Ammoniumsalzen und aus 2 bis 20 Gew.-% Perfluornonansäure und/oder Perfluordecansäure oder deren Alkali- oder Ammonimsalzen enthalten und

– eine Scherstabilität von 12 bis 60 min aufweisen, wobei unter Scherstabilität die Zeit verstanden wird, die benötigt wird, um eine Dispersion mit 20 Gew.-% Feststoffgehalt in einen breiigen Zustand umzuwandeln, wobei die spezifische Leistungsaufnahme des Rührers von anfänglich 4 Watt/l bis auf 24 Watt/l ansteigt.

Die vorliegende Erfindung beinhaltet ferner ein Verfahren zur Herstellung von solchen vorstehend beschriebenen stabilen, wäßrigen, kolloidalen Dispersionen von Copolymerisaten des Typs Tetrafluorethylen-Ethylen durch Copolymerisation dieser Comonomeren in wäßriger Phase bei Drücken von 5 bis 50 bar und Temperaturen von −5 bis +80°C in Gegenwart von Säuren des Mangans oder deren Salzen oder solchen Manganverbindungen, die unter den Reaktionsbedingungen in Mangansäuren oder deren Salze übergehen, als radikalbildende Initiatoren, einer die Dispersion stabilisierende Verbindung der allgemeinen Formel

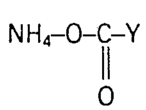

worin Y = $COONH_4$, COOH, $CH_3$, $CH_2OH$, $CH_2COOH$ oder $CH_2COONH_4$ ist, oder eines Gemisches dieser Verbindungen, von fluorierten Carbonsäuren oder deren Salzen sowie gegebenenfalls von Kettenübertragungsmitteln, das dadurch gekennzeichnet ist, daß als fluorierte Carbonsäuren oder deren Salze ein Gemisch aus

a) 98 bis 80 Gew.-% Perfluoroctansäure oder deren Alkali- oder Ammoniumsalzen und

b) 2 bis 20 Gew.-% Perfluornonansäure und/oder Perfluordecansäure oder deren Alkali- oder Ammoniumsalzen

in einer Konzentration von 0,1 bis 1,0 Gew.-%, bezogen auf das wäßrige Polymerisationsmedium, zugegen ist.

Unter dem Begriff «Scherstabilität» wir die Zeit verstanden, die benötigt wird, um eine Dispersion mit 20 Gew.-% Feststoffgehalt in einen breiigen Zustand umzuwandeln, wobei die spezifische Leistungsaufnahme des Rührers von anfänglich 4 Watt/l bis auf 24 Watt/l ansteigt.

Der Zeitpunkt der Verdickung ist außerdem erkennbar durch das Verschwinden einer Trombe und der Ausbildung einer ebenen Breioberfläche. Bei dem Eindickvorgang tritt eine Koagulation der ursprünglich kolloidalen Polymerteilchen mit einem mittleren Teilchendurchmesser von 0,05 bis 0,35 μm zu Polymerteilchen mit einem mittleren Teilchendurchmesser von 3 bis 10 μm ein. Die «Scherstabilität» wird nach folgendem Test gemessen (im folgenden als «Scherstabilitätstest» bezeichnet):

In einem Becherglas von 1 l Inhalt mit einem Innendurchmesser von 90 mm werden mit einem vierflügeligen Rührer 250 ml der Dispersion bei 2000 U/min bei Raumtemperatur bis zur vollständigen Verdickung gerührt. Der Abstand des Rührers vom Boden des Becherglases beträgt 25 mm. Die Rührerflügel sind 1 mm stark, 8 mm breit und besitzen eine Länge von 25 mm, gemessen von der Mitte der Rührerwelle. Die Rührerflügel stehen zur Rührerwelle in einem Winkel von 50°. Die Leistungsaufnahme des Rührers wird während des Eindickvorgangs gemessen und beträgt zu Beginn 4 Watt und nach Vorliegen des Breis 9 Watt. Die Leerlaufleistung des Rührers ohne Dispersion in Luft beträgt 3 Watt, so daß sich spezifische Rührleistungen von 4 W/l zu Beginn und 24 W/l zum Zeitpunkt der Verdickung, bezogen auf den Liter eingesetzte Dispersion, errechnen.

Die Zeit vom Einschalten des Rührers bis zum Eintreten der vollständigen Verdickung, sichtbar am Verschwinden der Trombe unter der angegebenen spezifischen Rührleistung am Anfang und Ende des Rührvorgangs ist eine gut reproduzierbare Meßgröße für die Scherstabilität. Dabei ist zu beachten, daß die Scherstabilität stark von der Feststoffkonzentration der Dispersion abhängt. Die Scherstabilität nimmt mit steigender Konzentration ab. Es ist daher erforderlich, die Polymerkonzentration im Test genau auf 20 Gew.-%, bezogen auf das Gesamtgewicht der Dispersion, einzustellen, sofern die Feststoffgehalte der zu messenden Ausgangsdispersionen über 20 Gew.-% liegen.

Die erfindungsgemäßen stabilen, wäßrigen, kolloidalen Dispersionen der genannten Copolymerisate besitzen eine Scherstabilität von 12 bis 60 min, vorzugsweise von 18 bis 40 min, bei einem Feststoffgehalt von 20 Gew.-%.

Es hat sich gezeigt, daß Dispersionen mit einer Scherstabilität im genannten Bereich auch ohne Zusatz organischer Dispersionsstabilisatoren gut pumpbar, lagerbar und transportfähig sind. Dispersionen mit einer Scherstabilität <10 min neigen beim Transport oder bei der Lagerung zur Ausbildung eines nicht redispergierbaren Breis. Dieser auch als «Ausfallen» bezeichnete Koagulationsvorgang führt zur Verlegung von Rohrleitungen und Behältern und ist bei allen Lager- und Transportvorgängen nicht akzeptabel.

Die Dispersionspartikel der erfindungsgemäßen Dispersionen besitzen einen mittleren Teilchendurchmesser von 0,05 bis 0,35 µm, vorzugsweise 0,10 bis 0,25 µm, sie sind rund und haben eine enge Größenverteilung. Die Dispersionen enthalten von ihrer Herstellung her als Emulgator ein Gemisch von

a) 98 bis 80 Gew.-% Perfluoroctansäure oder deren Alkali- oder Ammoniumsalzen und

b) 2 bis 20 Gew.-% Perfluornonansäure oder Perfluordecansäure oder deren Alkali- oder Ammoniumsalzen;

es können auch Gemische der letztgenannten Säuren oder deren Alkali- oder Ammoniumsalzen vorliegen.

Bevorzugt als Komponente b) ist die Perfluornonansäure oder deren Alkali- oder Ammoniumsalzen.

Die genannten Perfluorcabonsäuren können geradkettig oder kettenverzweigt sein. Dabei bezieht sich hier und im folgenden die Bezeichnung der Perfluorcarbonsäure auf die Gesamtzahl der C-Atome, ganz gleich, ob diese C-Atome in gerader Kette oder in Kettenverzweigungen angeordnet sind.

Sind von der Polymerisation her Kationen, wie beispielsweise Manganionen oder Eisenionen, in der Dispersion vorhanden, so können diese über Ionenaustauscher aus der Dispersion entfernt werden, ohne daß sich die Scherstabilität verändert.

Die beträchtliche Erhöhung der Scherstabilität bei den erfindungsgemäß hergestellten wäßrigen, kolloidalen Despersionen des Typs Tetrafluorethylen-Ethylen durch den Einsatz von Gemischen der Perfluoroctansäure mit Perfluornonan- bzw. -decansäure in dem genannten, sehr engen Mengenverhältnis ist ausgesprochen überraschend, da weder die reine Perfluoroctansäure allein noch die Perfluornonan- oder Perfluordecansäure allein Dispersionen mit ausreichender Scherstabilität ergeben (vgl. Tabelle I, erfindungsgemäßes Beispiel 2, mit den Vergleichsbeispielen A bis C). Auch Gemische von Perfluoroctansäure mit Perfluornonan- bzw. Perfluordecansäure im Gewichtsverhältnis 50 : 50 oder 70 : 30 ergeben Dispersionen mit unzureichender Stabilität (vgl. Tabelle I, Vergleichsbeispiele D und E). Auch Kombinationen von Perfluoroctansäure mit Perfluorheptansäure im Gewichtsverhältnis 95 : 5 führen zu einer Dispersion mit mangelnder Stabilität (vgl. Tabelle I, Vergleichsbeispiel F). Tabelle I zeigt ferner, daß in den Vergleichsbeispielen B, C, D und E bei der Polymerisation der gewünschte Polymerfeststoff von 20 Gew.-%, bezogen auf das Gesamtgewicht der Dispersion, nicht erreicht wird. Das bedeutet, daß sich aufgrund mangelnder Dispersionsstabilität bereits im Polymerisationsreaktor Koagulat gebildet hat.

Die Bildung von Koagulat führt zu einer charakteristischen Zunahme der Polymerisationsgeschwindigkeit. Die Reaktion wurde daher in den Vergleichsbeispielen B, C und D nach Eintreten der Koagulatbildung abgebrochen.

Tabelle I: Scherstabilitäten von Copolymerisatdispersionen des Typs Tetrafluorethylen-Ethylen unter Verwendung verschiedener Perfluorcarbonsäuren und deren Gemischen als Dispergierhilfsmittel

| Beispiel bzw. Vergleichsbeispiel | Perfluorcarbonsäure (Anteil in Gew.-%) | Erreichte Menge an Polymerfeststoff (Gew.-%) | Scherstabilität nach Scherstabilitätstest (min) |
|---|---|---|---|
| Beispiel 2 (erfindungsgemäß | 95 % Perfluoroctansäure<br>5 % Perfluornonansäure | 20 | 20 |
| Vergleichsbeispiel A | 100 % Perfluoroctansäure | 20 | 3,5 |
| Vergleichsbeispiel B | 100 % Perfluornonansäure | 14 | 0,1 |
| Vergleichsbeispiel C | 100 % Perfluordecansäure | 10 | 0,1 |
| Vergleichsbeispiel D | 50 % Perfluoroctansäure<br>50 % Perfluornonansäure | 13 | 0,1 |
| Vergleichsbeispiel E | 70 % Perfluoroctansäure<br>30 % Perfluornonansäure | 18 | 0,1 |
| Vergleichsbeispiel F | 95 % Perfluoroctansäure<br>5 % Perfluorheptansäure | 20 | 2,5 |

Die im erfindungsgemäßen Verfahren eingesetzten Perfluorcarbonsäuregemische sollen in einer Konzentration von 0,1 bis 1,0 Gew.-%, vorzugsweise von 0,2 bis 0,6 Gew.-%, bezogen auf das wäßrige Polymerisationsmedium, anwesend sein. Besonders bevorzugt ist eine Konzentration im Bereich von 0,3 bis 0,4 Gew.-%.

Die Emulsionspolymerisation zur Herstellung der wäßrigen, kolloidalen Dispersionen von Copolymerisaten des Typs Tetrafluorethylen-Ethylen erfolgt in wäßriger Phase bei üblichen Drücken von 5 bis 50, vorzugsweise 10 bis 25 bar, sowie bei Temperaturen von −5 bis +80°C, vorzugsweise von 20 bis 40°C.

Als wasserlösliche, radikalbildende Initiatoren sind im erfindungsgemäßen Emulsionspolymerisationsverfahren die Säuren des Mangans oder deren Salze zugegen, wie sie in der US-PS 3 859 262 beschrieben sind. Dies sind insbesondere die Salze der Mangansäure (VII) wie Kaliumpermanganat, Natriumpermanganat, Bariumpermanganat, Magnesiumpermanganat; weiterhin Salze der Mangansäure (VI), die Manganate wie beispielsweise Kaliummanganat, Ammoniummanganat, Natriummanganat und Calciummanganat; ferner eignen sich die Salze der Mangansäure (V) wie Natriumhypomanganat ($Na_3MnO_4 \cdot 10\,H_2O$) und die Salze der Mangansäure (IV), die Manganite. Auch die freien Säuren selbst, sofern sie im wäßrig-sauren Milieu beständig sind, können als Initiatoren verwendet werden, wie beispielsweise das kristalline Dihydrat der Permangansäure ($HMnO_4 \cdot 2H_2O$). Ebenso aktive Katalysatoren sind Substanzen, die erst unter den Bedingungen der Polymerisation in die vorgenannten Verbindungen übergehen, wie beispielsweise Säureanhydride wie Manganheptoxid ($Mn_2O_7$), ferner Oxyhydrate, Säurehalogenide und andere leicht hydrolysierbare höherwertige Manganverbindungen. Am vorteilhaftesten lassen sich Alkalipermanganate und Alkalimanganate oder die entsprechenden $NH_4$-Salze, insbesondere Kaliumpermanganat und Kaliummanganat, verwenden.

Die Polymerisation wird in üblicher Weise in dem bei der Emulsionspolymerisation von Fluorolefinen in Gegenwart der genannten Manganverbindungen eingehaltenen sauren pH-Bereich durchgeführt, bis herunter zu pH4 (vgl. US-PS 3 859 262). Bekannte Puffersubstanzen können zugegen sein.

Die erfindungsgemäßen wäßrigen, kolloidalen Dispersionen von Copolymerisaten des Typs Tetrafluorethylen-Ethylen enthalten a) höchstens 60 und mindestens 30 Mol-% an copolymerisierten Einheiten des Tetrafluorethylens und b) 60 bis 40 Mol-% an copolymerisierten Einheiten des Ethylens sowie c) zusätzlich 0 bis 15 Mol-%, vorzugsweise bis zu 8 Mol-%, mindestens eines weiteren α-olefinischen Comonomeren, wobei die untere Grenze des Gehaltes eines solchen oder solcher weiteren Monomerer bei 0,05, vorzugsweise bei 0,5 Mol-%, liegt, wenn eines oder mehrere solcher weiterer Monomerer gegebenenfalls anwesend sind. Bevorzugt werden Ter- und Quaterpolymere hergestellt. Die Terpolymeren können neben Ethylen und Tetrafluorethylen folgende α-olefinische Monomeren in den genannten Anteilen enthalten:

$c_1$) perfluorierte Olefine der Formel $CF_2{=}CF{-}Rf1$, worin Rf1 ein Perfluoralkylrest mit 1 bis 10, vorzugsweise mit 1 bis 5 C-Atomen ist.

Bevorzugt ist vor allem Hexafluorpropylen. Die Herstellung der längerkettigen perfluorierten Olefine ist beispielsweise beschrieben in der US-PS 2 668 864;

$c_2$) perfluorierte Vinylether der Formel $CF_2{=}CF{-}O{-}Rf2$, worin Rf2 ein Perfluoralkylrest mit 1 bis 10, vorzugsweise 1 bis 4 C-Atomen ist. Zu nennen sind der Perfluorethyl-, Perfluor-n-butyl- und insbesondere der Perfluor-n-propyl-Rest. Die Herstellung solcher Perfluor(alkylvinyl)-ether ist bekannt aus der US-PS 3 180 895;

$c_3$) perfluorierte Vinylether der Formel

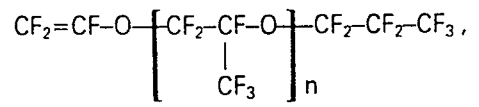

worin n = 1 bis 4, vorzugsweise 1 oder 2 ist. Die Herstellung solcher perfluorierter Vinylether ist bekannt aus der US-PS 3 450 684.

$c_4$) Perfluorierte Vinylether der Formel

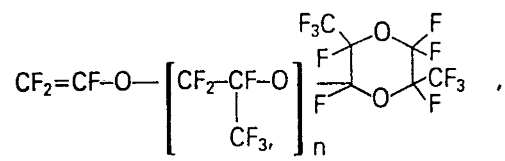

worin n = 0 bis 1, vorzugsweise 0 ist. Die Herstellung dieser Monomeren ist beschrieben in der US-PS 4 013 689;

$c_5$) Perfluor-2-methylen-4-methyl-1,3-dioxolan, dessen Herstellung aus der US-PS 3 308 107 bekannt ist;

$c_6$) perfluorierte Vinylether der allgemeinen Formel $CF_2{=}CF{-}O{-}(CF_2)_n{-}COX_1$, worin $X_1$ für OH, $OR_1$ oder $NR_2R_3$ steht, und wobei $R_1$ eine Alkylgruppe mit 1 bis 3 C-Atomen ist und $R_2$ und $R_3$ jeweils für ein Wasserstoffatom oder für $R_1$ stehen und n eine Zahl von 1 bis 10 bedeutet. Die Herstellung solcher Monomerer ist bekannt aus der GB-PS 1 145 445. Bevorzugt ist $X_1$ = OH oder $OCH_3$;

$c_7$) fluorierte Vinylether der Formel

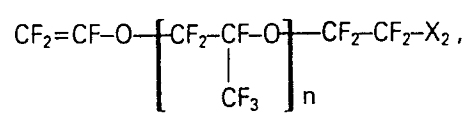

worin $X_2$ für $COOR_4$, COOH, oder CN steht, $R_4$ eine Alkylgruppe mit 1 bis 3 C-Atomen und n eine ganze Zahl von 1 bis 4 bedeutet. Die Herstellung solcher Comonomerer ist beschrieben in der US-PS 4 138 426. Bevorzugt ist $X_2$ = COOH oder $COOCH_3$;

$c_8$) perfluoralkylsubstituierte Vinylverbindungen der Formel $CH_2{=}CH{-}Rf3$, worin Rf3 ein Perfluoralkylrest mit 2 bis 10, vorzugsweise 2 bis 6 C-Atomen ist. Solche teilfluorierten Olefine werden hergestellt durch Anlagerung von Ethylen an ein Perfluoralkyliodid und anschließende Dehydrohalogenierung mit Alkalihydroxid, wie beschrieben in der US-PS 3 535 381;

$c_9$) fluorhaltige Olefine der Formel $CH_2=CRf4-Rf3$, worin Rf4 = F oder $CF_3$, und Rf3 ein Perfluoralkylrest mit 1 bis 10, vorzugsweise 1 bis 6 C-Atomen ist. Insbesondere ist hier zu nennen das 3,3,3-Trifluor-2-trifluormethylpropylen, das beispielsweise nach der in J. Chem. Soc. (London) 1953, Seite 3567, beschriebenen Methode hergestellt werden kann;

$c_{10}$) 1,1,1-Trifluor-2-(trifluormethyl)-4-penten-2-ol

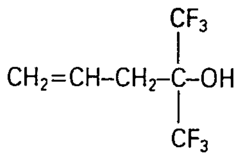

dessen Herstellung aus der US-PS 3 444 148 bekannt ist;

$c_{11}$) Allyl-1-hydroxy-hexafluorisopropylether

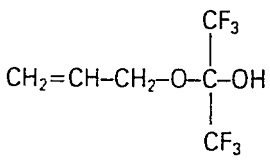 ,

das durch die Anlagerung von Allylalkohol an Hexafluoraceton entsteht, wie beschrieben ind er FR-PS 2 178 724;

$c_{12}$) Verbindungen der allgemeinen Formel $CH_2=CH-(CH_2)_n-O-CF_2-CFX^3H$, worin $X^3$ = F, Cl oder Trifluormethyl, vorzugsweise F und n Null oder 1 ist. Monomere mit n = 1 können hergestellt werden durch die Anlagerung des entsprechenden Fluor- oder Chlorfluorolefins an Allylalkohol, wie beschrieben in der US-PS 2 975 161. Monomere mit n = 0 können hergestellt werden nach der US-PS 2 631 975;

$c_{13}$) Allyl- oder Methallylester der Formel $CH_2=CR_5-CH_2-O-CO-R_6$, worin $R_5$ = H oder $CH_3$ und $R_6$ ein Alkylrest mit 1 bis 3 C-Atomen, vorzugsweise ein Methylrest ist;

$c_{14}$) Vinylester der allgemeinen Formel $CH_2=CH-O-CO-R_7$, worin $R_7$ ein Alkylrest mit 1 bis 3 C-Atomen, vorzugsweise ein Methylrest ist;

$c_{15}$) α-Olefine mit 3 bis 4 C-Atomen, vorzugsweise Isobutylen.

$c_{16}$) Acrylsäureester und Methacrylsäureester, vorzugsweise deren Methyl- bis Butylester;

$c_{17}$) Vinylidenfluorid und

$c_{18}$) Trifluorchlorethylen.

Bevorzugte Termonomere (neben Tetrafluorethylen und Ethylen) sind in diesen Terpolymeren die obengenannten Monomeren der Gruppen $c_1$), $c_2$), $c_3$), $c_4$), $c_9$), $c_{12}$), $c_{14}$), und $c_{18}$) und davon insbesondere deren als bevorzugt genannte Vertreter.

Es können nach dem erfindungsgemäßen Verfahren auch wäßrige, kolloidale Dispersionen von Quaterpolymeren oder von Copolymeren noch höherer Ordnung gewonnen werden, indem zwei oder mehrere der unter $c_1$) bis $c_{18}$) genannten Monomeren im Gemisch eingesetzt werden. Bevorzugt sind Quaterpolymere aus Tetrafluorethylen/Ethylen/Hexafluorpropylen mit Vinylidenfluorid oder Trifluorchlorethylen und insbesondere solche, die neben Tetrafluorethylen/Ethylen/Hexafluorpropylen noch ein Monomeres aus den obengenannten Gruppen $c_1$) bis $c_{16}$) enthalten, wobei von den letzteren wiederum die Gruppen $c_2$), $c_3$), $c_4$), $c_{12}$) und $c_{14}$) den Vorzug haben.

Solche Quaterpolymere sind beispielsweise beschrieben in den US-PS 4 381 387. Sie bestehen aus 55 bis 30 Mol-%, vorzugsweise 55 bis 40 Mol-%, an copolymerisierten Einheiten des Tetrafluorethylens, 60 bis 40 Mol-%, vorzugsweise 55 bis 45 Mol-%, an copolymerisierten Einheiten des Ethylens, 10 bis 1,5 Mol-%, vorzugsweise 8 bis 3 Mol-% und insbesondere 5 bis 3 Mol-% an copolymerisierten Einheiten des Hexafluorpropylens sowie 2,5 bis 0,05 Mol-%, vorzugsweise 1 bis 0,1 Mol-% und insbesondere 0,8 bis 0,2 Mol-% an copolymerisierten Einheiten des weiteren Monomeren aus den obengenannten Gruppen $c_1$) bis $c_{18}$), wobei sich die 4 Bestandteile jeweils auf 100 Mol-% ergänzen.

Um die vorstehend genannte Zusammensetzung der die wäßrigen, kolloidalen Dispersionen ausmachenden Copolymeren zu erhalten, sind bei der Copolymerisation die Molverhältnisse der eingesetzten Monomeren wie folgt zu bemessen: Vor Beginn der Copolymerisation wird ein Monomerengemisch von Tetrafluorethylen zu Ethylen im Molverhältnis-Bereich von 50 : 50 bis 90 : 10, vorzugsweise von 65 : 35 bis 75 : 25, durch Aufpressen eingestellt. Während der Polymerisation werden Tetrafluorethylen und Ethylen in einem Molverhältnis-Bereich von 40 : 60 bis 60 : 40 zugeführt. Wird der Einbau weiterer Monomerer in einer Menge von 0,05 bis 15 Mol-%, vorzugsweise von 0,5 bis 8 Mol-% gewünscht, so werden die weiteren Monomeren sowohl dem im Reaktor vorgelegten als auch dem zugefahrenen Tetrafluorethylen-Ethylen-Gemisch hinzugefügt. Die vorgelegten und zugefahrenen Mengen an weiteren Comonomeren hängen ab von der Art der weiteren Monomeren und der Höhe des gewünschten Einbaus. Dem Fachmann sind die erforderlichen Mengen an vorzulegenden und nachzuführenden weiteren Monomeren bei Kenntnis der Copolymerisationsparameter, die im Einzelfall zu ermitteln sind, bekannt.

Gegebenenfalls können bei der Copolymerisation zur Einstellung bestimmter, verarbeitungsgerechter Schmelzviskositäten den herzustellenden Copolymeren übliche Kettenübertragungsmittel zugegeben werden, wie beispielsweise Aceton, Methylenchlorid oder Chloroform.

In einer bevorzugten Ausführungsform des erfindungsgemäßen Verfahrens wird die Copolymerisation in Gegenwart der obengenannten Manganverbindungen als Initiatoren und eines Kettenübertragungsmittels der allgemeinen Formel

$$X-CH_2-COOR,$$

worin X = Cl, Br, COOH, COOR, COCH, $CH_3$, $C_2H_5$ oder $C_3H_7$ ist und R einen Alkylrest mit 1 bis 4

C-Atomen bedeutet, durchgeführt, wie beschrieben in der US-PS 4 338 237.

Bevorzugte Kettenübertragungsmittel sind der Dimethylester der Methylethylester und besonders der Diethylester der Malonsäure.

Es liegt im Rahmen der Erfindung, daß auch Gemische der genannten Kettenübertragungsmittel zugegeben werden können.

Weiterhin wird die Copolymerisation nach dem erfindungsgemäßen Verfahren in Gegenwart einer die Dispersion stabilisierenden, nicht-tensidischen Verbindung der allgemeinen Formel

$$NH_4-O-\underset{\underset{O}{\|}}{C}-Y\,,$$

worin Y = $COONH_4$, COOH, $CH_3$, $CH_2OH$, $CH_2COOH$ oder $CH_2COONH_4$ ist, oder eines Gemisches dieser Verbindungen vorgenommen. Bevorzugte, die Dispersion stabilisierende Verbindungen sind Monoammonium- und insbesondere Diammoniumoxalat. Die genannten stabilisierenden Verbindungen können auch als Hydrate vorliegen, und es können Gemische von Verbindungen aus der angegebenen Gruppe eingesetzt werden. Auch dies ist beschrieben in der US-PS 4 338 237.

Perfluorierte Carbonsäuren mit 8 bis 10 C-Atomen, wie sie im erfindungsgemäßen Verfahren eingesetzt werden, können durch Elektrofluorierung nach dem Simons-Prozeß hergestellt werden [vgl. D. Lines und H. Sutcliffe, J. Fluorine Chem. 17 (1981) Seiten 423 bis 439]. Bei der Elektrofluorierung findet eine partielle Isomerisierung statt, so daß bei Einsatz von geradkettigen Säurechloriden auch kettenverzweigte Fluorcarbonsäuren entstehen. Die nach dem Simons-Prozeß hergestellte handelsübliche Perfluoroctansäure enthält daher neben geradkettiger Perfluoroctansäure bis zu 21 Mol-% kettenverzweigte Perfluoroctansäuren verschiedener Struktur.

Perfluorierte Carbonsäuren mit 8 bis 10 C-Atomen können ferner hergestellt werden durch

– die Oxidation der jeweils entsprechenden Perfluoralkyliodide mit Oleum, wie beschrieben in der US-PS 4 400 325;

– die Umsetzung der jeweils entsprechenden Perfluoralkyliodide mit Kohlendioxid und aktiviertem Zink, wie beschrieben in der US-PS 4 221 734; und

– die Oxidation der jeweils entsprechenden Olefine der Formel $RfCH=CH_2$ mit beispielsweise Ozon, wie beschrieben in der US-PS 4 138 417.

Die nach dem erfindungsgemäßen Verfahren hergestellten Dispersionen sind erhältlich mit Feststoffgehalten bis zu 30 Gew.-%. Sie können nach üblichen Verfahren auf Feststoffgehalte bis zu 60 Gew.-% aufkonzentriert und in dieser Form für Beschichtungen von Substraten aller Art oder für Imprägnierungen eingesetzt werden.

Die erfindungsgemäßen Dispersionen besitzen, wie oben gezeigt, eine überraschend hohe Scherstabilität. Sie sind daher im Gegensatz zu herkömmlichen Dispersionen praktisch ohne Verluste durch eine Koagulation von Feststoff förderbar, pumpbar, lagerstabil und transportfähig. Sie können auch nach bekannten Verfahren, wie beispielsweise durch Einwirkung mechanischer Scherkräfte und/oder durch Zusatz von Elektrolyten oder anderen Koagulationsmitteln koaguliert werden. Dabei ist es erforderlich, daß bei der Koagulation durch alleinigen Einsatz von Scherkräften diese in ihrer Leistung so bemessen werden, daß sie die Scherstabilität der Dispersion übersteigen. Das gewonnene Koagulat wird nach Waschen und Trocknen zweckmäßigerweise in der Schmelze granuliert. In dieser Form können die Copolymerisate dann nach thermoplastischen Formgebungsverfahren aus der Schmelze zu Folien, Rohren, Stäben, Spritzgußteilen und anderen Formkörpern verarbeitet werden. Sie eignen sich ferner zur Herstellung von Monofilen mit guten mechanischen Eigenschaften, die sich zu Geweben mit guter thermischer und chemischer Beständigkeit weiterverarbeiten lassen. Sie sind insbesondere geeignet zur Herstellung von Überzügen für elektrische Leiter. Die so hergestellten Drahtüberzüge sind bei hoher Temperatur nicht spröde und zeigen keine Neigung zur Rißbildung.

Die Erfindung wird durch folgende Beispiele erläutert:

Beispiele 1 bis 9 und Vergleichsbeispiele A bis F

In den Beispielen 1 bis 9 und Vergleichsbeispielen A bis F wird unter folgenden Reaktionsbedingungen gearbeitet:

In einen emaillierten Polymerisationsreaktor mit einem Gesamtvolumen von 190 l, ausgestattet mit Stromstörer und Impellerrührer, werden 130 l entsalztes Wasser eingefüllt, in dem 505 g Diammoniumoxalat-Monohydrat, 142 g Malonsäurediethylester (Beispiel 9: 300 g $CH_2Cl_2$ anstelle des Malonsäurediethylesters) und die in der Tabelle 2 und 3 angegebene Menge an Perfluorcarbonsäure bzw. Perfluorcarbonsäuregemisch gelöst sind. Der Polymerisationsreaktor wird zunächst mit Stickstoff und anschließend mit Tetrafluorethylen gespült. Die Rührgeschwindigkeit wird auf 210 U/min eingestellt, sodann werden die in Tabelle II bzw. III angegebenen Mengen an Comonomeren vorgelegt. Dann wird Tetrafluorethylen bis zu einem Gesamtmonomerdruck von 13,7 bar und anschließend Ethylen bis zu einem Gesamtmonomerdruck von 17 bar aufgepreßt. Danach wird die Polymerisation durch Einpumpen einer Lösung von Kaliumpermanganat mit einer Konzentration von 20 g $KMnO_4$ pro Liter Wasser gestartet. Die Zufuhr der Kaliumpermanganat-Lösung wird nach dem Polymerisationsstart so einreguliert, daß eine Polymerisationsgeschwindigkeit von etwa 30 bis etwa 100 g/l. h erreicht wird. Die Polymerisationstemperatur liegt bei 26 bis 27°C. Die entstehende Polymerisationswärme wird mit einem Kühlmedium über den Kühlmantel des Polymerisationsreaktors abgeführt. Der Gesamtmonomerdruck von 17 bar wird automatisch durch kontinuierliche Zuspeisung eines Tetrafluorethylen-Ethylen-Gemisches im molaren Verhältnis von 1 : 1 aufrechterhalten. Während des Polymerisationsverlaufs werden die in Tabelle II bzw. III angegebenen Mengen der Comonomeren kontinuierlich nachdosiert. Die Reaktion wird bei einem Copolymer-Feststoffgehalt von etwa 20 Gew.-%, bezogen auf das Gesamtgewicht der Dispersion, durch entspannen des Monomerengemisches abgebrochen. Gebildetes Koagulat wird durch Filtration abgetrennt. Der genaue Feststoffgehalt der filtrierten Dispersion wird durch Dichtemessung mit einer Spindel festgestellt. Polymerisationsdauer, Polymerisat-Feststoffgehalt, Fluorgehalt des Polymerisates und Scherstabilität der Dispersion sind in Tabelle II bzw. III angegeben.

Tabelle II Beispiele 1 bis 9

| Beispiel Nr. | 1 | 2 | 3 | 4 | 5 | 6 | 7 | 8 | 9 |
|---|---|---|---|---|---|---|---|---|---|
| Perfluorcarbonsäure Art/ Mischungsverhältnis (Gew.-%) | POS97 PNS 3 | POS95 PNS 5 | POS95 PINS5 | POS95 PDS 5 | POS90 PNS10 | POS95 PNS 5 | POS95 PNS 5 | POS95 PNS 5 | POS95 PNS 5 |
| Perfluorcarbonsäuregemisch (g/l wäßriges Polymerisations-medium) | 3,5 | 3,5 | 3,7 | 3,5 | 3,9 | 3,9 | 4,0 | 3,7 | 3,7 |
| Art des Comonomeren | HFP | HFP | HFP | HFP | HFP | HFIB | PPVE | HFP/PPVE | HFP |
| Gesamtmenge (g) | 3950 | 3950 | 3950 | 3950 | 19000 | 3130 | 2000 | 2200/450 | 3950 |
| davon vorgelegt (g) | 1190 | 1190 | 1190 | 1190 | 8840 | 610 | 500 | 700/164 | 1190 |
| davon nachdosiert (g) | 2760 | 2760 | 2760 | 2760 | 10200 | 2520 | 1500 | 1500/286 | 2760 |
| Polymerisationsdauer (h) | 6,2 | 6,2 | 5,9 | 6,7 | 8,7 | 6,9 | 4,0 | 5,3 | 7,7 |
| Polymerfeststoffgehalt (Gew.-%) | 20,8 | 20,3 | 20,7 | 19,8 | 20,1 | 20,5 | 22 | 20 | 19,9 |
| Fluorgehalt | 60,7 | 61,2 | 60,3 | 61,6 | 62,3 | 60,9 | 61,2 | 60,7 | 60,5 |
| Polymerzusammensetzung (Mol-%) | | | | | | | | | |
| Tetrafluorethylen | 49,4 | 50,3 | 48,2 | 50,2 | 42,7 | 50,1 | 52,7 | 49,7 | 48,4 |
| Ethylen | 48,0 | 46,9 | 48,9 | 46,3 | 46,4 | 46,9 | 46,6 | 48,0 | 48,5 |
| Zusätzliches Comonomer | 2,6 | 2,8 | 2,9 | 3,5 | 10,9 | 3,0 | 0,7 | 2,0/0,3 | 3,0 |
| Scherstabilität (min) | 15 | 20 | 18 | 13 | 42 | 28 | 18 | 25 | 13 |

Tabelle III Vergleichsbeispiele A bis G

| Vergleichsbeispiel | A | B* | C* | D* | E | F | G** |
|---|---|---|---|---|---|---|---|
| Perfluorcabonsäure Art/ Mischungsverhältnis (%) | POS | PNS | PDS | POS50 PNS50 | POS70 PNS30 | POS95 PHS 5 | POS |
| Perfluorcarbonsäure (g/l wäßriges Polymerisationsmedium) | 3,5 | 3,5 | 3,5 | 3,5 | 3,5 | 3,5 | 4,0 |
| Art des Comonomeren | HFP | HFP | HFP | HFP | HFP | HFP | HFP/PPVE |
| Gesamtmenge (g) | 3950 | 3370 | 2900 | 2820 | 3950 | 3950 | 4600/2000 |
| davon vorgelegt (g) | 1190 | 1190 | 1190 | 1190 | 1190 | 1190 | 1500/ 500 |
| davon nachdosiert (g) | 2760 | 2180 | 1710 | 1630 | 2760 | 2760 | 3100/1500 |
| Polymerisationsdauer (h) | 7,9 | 7,2 | 6,6 | 5,3 | 6,5 | 7,0 | 5,6 |
| Polymerfeststoffgehalt (Gew.-%) | 19 | 14 | 10 | 13 | 18 | 21 | 22 |
| Fluorgehalt (Gew.-%) | 60,1 | 61,1 | 60,5 | 61,1 | 60,8 | 60,3 | 61,0 |
| Polymerzusammensetzung (Mol-%) | | | | | | | |
| Tetrafluorethylen | 47,5 | 49,6 | 48,8 | 48,5 | 48,7 | 48,2 | 46,8 |
| Ethylen | 49,3 | 47,3 | 48,4 | 47,5 | 48,0 | 48,9 | 48,1 |
| Zusätzliches Comonomer | 3,2 | 3,2 | 2,7 | 4,0 | 3,4 | 2,9 | 4,4/0,8 |
| Scherstabilität | 3,5 | 0,1 | 0,1 | 0,1 | 0,1 | 2,5 | 8,3 |

*) Reaktion nach Eintreten der Koagulatbildung abgebrochen
**) US-PS 4 338 237 Beispiel 1, nachgearbeitet mit handelsüblicher Perfluoroctansäure (FC-26 der Firma Minnesota Mining and Manufg. Co.)

Die in den Tabellen II und III gebrauchten Abkürzungen haben folgende Bedeutungen:

POS = Perfluoroctansäure

Beispiele und Vergleichsbeispiele A bis F: POS ohne Kettenverzweigungen, hergestellt durch Oxidation von n-Perfluoroctyliodid mit Oleum.

Vergleichsbeispiel G: Handelsübliche POS der Fa. Minnesota Mining and Manufacturing Co. (FC-26), enthält 21 Gew.-% kettenverzweigte Perfluoroctansäuren nach gaschromatographischer Analyse der n-Propylester.

PNS = Perfluornonansäure, ohne Kettenverzweigungen, hergestellt durch Umsetzung von n-Perfluoroctyliodid mit $CO_2$ und Zink.

PINS = Perfluorisononansäure, hergestellt durch Umsetzung von Perfluorisooctyliodid mit $CO_2$ und Zink.

PDS = Perfluordecansäure, ohne Kettenverzweigungen, hergestellt durch Oxidation von n-Perfluordecyliodid mit Oleum.

PHS = Perfluorheptansäure, hergestellt aus Perfluor-n-hexyliodid mit $CO_2$ und Zink.

HFP = Hexafluorpropylen.

HFIB = Hexafluorisobutylen.

PPVE = Perfluorpropylvinylether.

## Patentansprüche

1. Stabile, wäßrige, kolloidale Dispersionen von Copolymerisaten des Typs Tetrafluorethylen-Ethylen, bestehend aus höchstens 60 Mol-% und mindestens 30 Mol-% an copolymerisierten Einheiten des Tetrafluorethylens, 60 bis 40 Mol-% an copolymerisierten Einheiten des Ethylens und 0 bis 15 Mol-% an copolymerisierten Einheiten mindestens eines weiteren α-olefinischen Comonomeren und enthaltend eine die Dispersion stabilisierende Verbindung der Formel

$$NH_4-O-\underset{\underset{O}{\|}}{C}-Y$$

worin Y = $COONH_4$, $COOH$, $CH_3$, $CH_2OH$, $CH_2COOH$ oder $CH_2COONH_4$ ist, oder ein Gemisch dieser Verbindungen, dadurch gekennzeichnet, daß diese Dispersionen

– 0,1 bis 1 Gew.-%, bezogen auf die Dispersion, eines Gemisches aus 98 bis 80 Gew.-% Perfluoroctansäure oder deren Alkali- oder Ammoniumsalzen und aus 2 bis 20 Gew.-% Perfluornonansäure und/oder Perfluordecansäure oder deren Alkali- oder Ammoniumsalzen enthalten und

– eine Scherstabilität von 12 bis 60 min aufweisen, wobei unter Scherstabilität die Zeit verstanden wird, die benötigt wird, um eine Dispersion mit 20 Gew.-% Feststoffgehalt in einen breiigen Zustand umzuwandeln, wobei die spezifische Leistungsaufnahme des Rührers von anfänglich 4 Watt/l bis auf 24 Watt/l ansteigt.

2. Stabile, wäßrige, kolloidale Dispersionen des Typs Tetrafluorethylen-Ethylen gemäß Anspruch 1, dadurch gekennzeichnet, daß diese Dispersionen eine Scherstabilität von 18 bis 40 min aufweisen.

3. Verfahren zur Herstellung von stabilen, wäßrigen, kolloidalen Dispersionen von Copolymerisaten des Typs Tetrafluorethylen-Ethylen gemäß Anspruch 1 oder 2 durch Copolymerisation dieser Comonomeren in wäßriger Phase bei Drücken von 5 bis 50 bar und Temperaturen von −5 bis +80°C in Gegenwart von Säuren des Mangans oder deren Salzen oder solchen Manganverbindungen, die unter den Reaktionsbedingungen in Mangansäuren oder deren Salze übergehen, als radikalbildende Initiatoren, einer die Dispersion stabilisierende Verbindung der allgemeinen Formel

$$NH_4-O-\underset{\underset{O}{\|}}{C}-Y$$

worin Y = $COONH_4$, $COOH$, $CH_3$, $CH_2OH$, $CH_2COOH$ oder $CH_2COONH_4$ ist, oder eines Gemisches dieser Verbindungen, von fluorierten Carbonsäuren oder deren Salzen sowie gegebenenfalls von Kettenübertragungsmitteln, dadurch gekennzeichnet, daß als fluorierte Carbonsäuren oder deren Salze ein Gemisch aus

a) 98 bis 80 Gew.-% Perfluoroctansäure oder deren Alkali- oder Ammoniumsalzen und

b) 2 bis 20 Gew.-% Perfluornonansäure und/oder Perfluordecansäure oder deren Alkali- oder Ammoniumsalzen

in einer Konzentration von 0,1 bis 1,0 Gew.-%, bezogen auf das wäßrige Polymerisationsmedium, zugegen ist.

4. Verfahren zur Herstellung von stabilen, wäßrigen, kolloidalen Dispersionen von Copolymerisaten des Typs Tetrafluorethylen-Ethylen gemäß Anspruch 3, dadurch gekennzeichnet, daß bei der Copolymerisation ein Kettenübertragungsmittel der allgemeinen Formel

$$X-CH_2-COOR$$

worin X = Cl, Br, COOH, COOR, $COCH_3$, $CH_3$, $C_2H_5$ oder $C_3H_7$ ist und R einen Alkylrest mit 1 bis 4 C-Atomen bedeutet, zugegen ist.

5. Verfahren zur Herstellung von stabilen, wäßrigen, kolloidalen Dispersionen von Copolymerisaten des Typs Tetrafluorethylen-Ethylen gemäß Anspruch 3 oder 4, dadurch gekennzeichnet, daß als die die Dispersion stabilisierende Verbindung Diammoniumoxalat zugegen ist.

## Claims

1. A stable, aqueous, colloidal dispersion of a copolymer of the tetrafluoroethylene/ethylene type comprising at most 60 mol%, and at least 30 mol% of copolymerised tetrafluoroethylene units, 60 to 40 mol% of copolymerised ethylene units and 0 to 15 mol% of copolymerised units of at least one further α-olefinic comonomer and a compound stabilising the dispersion, of the formula

$$NH_4-O-\underset{\underset{O}{\|}}{C}-Y,$$

wherein Y is $COONH_4$, COOH, $CH_3$, $CH_2OH$, $CH_2COOH$ or $CH_2COONH_4$, or a mixture of these compounds, characterised in that this dispersion
– contains 0.1 to 1.0% by weight of a mixture of 98 to 80% by weight of perfluorooctanoic acid or alkali metal or ammonium salts thereof and 2 to 20% by weight of perfluorononanoic acid and/or perfluorodecanoic acid or alkali metal or ammonium salts thereof,
– has a shear stability of 12 to 60 minutes, with the term shear stability is to be understood as the time required for converting a dispersion of 20% by weight solids content into a pasty state, with the specific power input to the stirrer rising from initially 4 watt/l to 24 watt/l.

2. A stable, aqueous, colloidal dispersion of the tetrafluoroethylene/ethylene type, as claimed in claim 1, which is characterised by a shear stability of 18 to 40 minutes.

3. A process for the preparation of a stable, aqueous, colloidal dispersion of a copolymer of the tetrafluoroethylene/ethylene type as claimed in claim 1 or 2 by copolymerising these comonomers in aqueous phase under pressures of 5 to 50 bar, and at temperatures of −5 to +80°C in the presence
– of acids of manganese or salts thereof or those manganese compounds which are transformed into manganic acids or salts thereof under reaction conditions, as initiators forming free radicals,
– of a compound stabilising the dispersion, of the formula

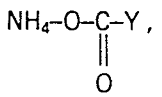

wherein Y is $COONH_4$, COOH, $CH_3$, $CH_2OH$, $CH_2COOH$ or $CH_2COONH_4$, or a mixture of these compounds,
– of fluorinated carboxylic acids or salts thereof and, if appropriate, chain transfer agents, characterised in that a mixture of
a) 98 to 80% by weight of perfluorooctanoic acid or alkali metal or ammonium salts thereof and
b) 2 to 20% by weight of perfluorononanionic acid or perfluorodecanoic acid or alkali metal or ammonium salts thereof
in a concentration of 0.1 to 1.0% by weight, relative to the aqueous polymerisation medium, is present as the fluorinated carboxylic acids or salts thereof.

4. The process for the preparation of a stable, aqueous, colloidal dispersion of a copolymer of the tetrafluoroethylene/ethylene type, as claimed in claim 3, characterised in that a chain transfer agent of the formula

$$X-CH_2-COOR$$

wherein X = Cl, Br, COOH, COOR, $COCH_3$, $CH_3$, $C_2H_5$ or $C_3H_7$ and R is an alkyl radical having 1 to 4 carbon atoms, is present in the copolymerisation.

5. The process for the preparation of a stable, aqueous, colloidal dispersion of a copolymer of the tetrafluoroethylene/ethylene type, as claimed in claim 3 or 4, characterised in that diammonium oxalate is present as the compound which stabilises the dispersion.

## Revendications

1. Dispersions colloïdales aqueuses, stables, de copolymères du type tétrafluoréthylène-éthylène, constitués d'au plus 60% en moles et d'au moins 30% en moles de motifs copolymérisés de tétrafluoréthylène, de 60 à 40% en moles de motifs copolymérisés d'éthylène, et de 0 à 15% en moles de motifs copolymérisés d'au moins un autre comonomère α-oléfinique, et contenant un composé dispersant la dispersion, de formule

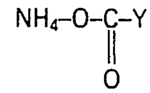

dans laquelle Y = $COONH_4$, COOH, $CH_3$, $CH_2OH$, $CH_2COOH$ ou $CH_2COONH_4$, ou encore un mélange de ces composés, caractérisées en ce que
– ces dispersions contiennent de 0,1 à 1% en poids, par rapport à la dispersion, d'un mélange de 98 à 80% en poids d'acide perfluorooctanoïque ou de ses sels de métaux alcalins ou d'ammonium, et de 2 à 20% en poids d'acide perfluorononanoïque et/ou d'acide perfluorodécanoïque ou de leurs sels de métaux alcalins ou d'ammonium, et
– elles présentent une stabilité au cisaillement de 12 à 60 minutes, la stabilité au cisaillement étant définie par le temps nécessaire pour convertir à l'état pâteux une dispersion ayant un extrait sec de 20% en poids, la puissance spécifique absorbée de l'agitateur passant d'une valeur initiale de 4 W/litre à 24 W/litre.

2. Dispersions colloïdales aqueuses, stables, du type tétrafluoréthylène-éthylène selon la revendication 1, caractérisées en ce que ces dispersions présentent une stabilité au cisaillement de 18 à 40 minutes.

3. Procédé pour la préparation de dispersions colloïdales, aqueuses, stables, de copolymères du type tétrafluoréthylène-éthylène selon les revendications 1 ou 2, par copolymérisation de ces comonomères en phase aqueuse sous une pression de 5 à 50 bar et à des températures de −5 à +80°C, en présence d'acides dérivés du manganèse ou de leurs sels, ou de composés du manganèse qui, dans les conditions de la réaction, se transforment en acides manganiques ou en leurs sels, servant d'amorceurs radicalaires, d'un composé stabilisant la dispersion, de formule générale

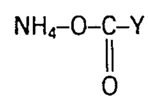

dans laquelle Y = $COONH_4$, COOH, $CH_3$, $CH_2OH$, $CH_2COOH$ ou $CH_2COONH_4$, ou encore un mélange de ces composés, d'acides carboxyliques fluorés ou de leurs sels, et éventuellement d'agents de transfert de chaîne, caractérisé en ce que les

acides carboxyliques fluorés ou leurs sels sont présents sous la forme d'un mélange

a) de 98 à 80% en poids d'acide perfluorooctanoïque ou de ses sels de métaux alcalins ou d'ammonium, et

b) de 2 à 20% en poids d'acide perfluorononanoïque et/ou d'acide perfluorodécanoïque ou de leurs sels de métaux alcalins ou d'ammonium,

en une concentration de 0,1 à 1,0% en poids par rapport au milieu aqueux de polymérisation.

4. Procédé pour la préparation de dispersions colloïdales aqueuses stables de copolymères du type tétrafluoréthylène-éthylène selon la revendication 3, caractérisé en ce que, lors de la copolymérisation, est présent un agent de transfert de chaîne de formule générale

$$X\text{–}CH_2\text{–}COOR,$$

dans laquelle X = Cl, Br, COOH, COOR, $COCH_3$, $CH_3$, $C_2H_5$ ou $C_3H_7$, et R est un radical alkyle ayant de 1 à 4 atomes de carbone.

5. Procédé pour la dispersion de dispersions colloïdales aqueuses stables de copolymères du type tétrafluoréthylène-éthylène selon la revendication 3 ou 4, caractérisé en ce qu'est présent, en tant que composé stabilisant la dispersion, de l'oxalate diammonique.